Europäisches Patentamt

European Patent Office

Office européen des brevets

(11) Publication number: **0 084 965**
**B1**

(12) **EUROPEAN PATENT SPECIFICATION**

(45) Date of publication of patent specification: **18.06.86**

(51) Int. Cl.⁴: **C 09 C 1/36, C 09 C 3/06**

(21) Application number: **83300316.3**

(22) Date of filing: **21.01.83**

(54) Alumina coated TiO2.

(30) Priority: **21.01.82 US 341334**

(43) Date of publication of application:
**03.08.83 Bulletin 83/31**

(45) Publication of the grant of the patent:
**18.06.86 Bulletin 86/25**

(84) Designated Contracting States:
**BE DE FR GB IT NL**

(56) References cited:
**US-A-3 086 877**
**US-A-4 022 636**

(73) Proprietor: **E.I. DU PONT DE NEMOURS AND COMPANY**
**1007 Market Street**
**Wilmington Delaware 19898 (US)**

(72) Inventor: **Jacobson, Howard Wayne**
**2009 Longcome Drive**
**Wilmington Delaware 19803 (US)**

(74) Representative: **Woodcraft, David Charles et al**
**BROOKES & MARTIN High Holborn House 52/54 High Holborn**
**London, WC1V 6SE (GB)**

Courier Press, Leamington Spa, England.

## Description

The present invention relates to titanium dioxide pigment coated with a composite of dense alumina and boehmite alumina and the process for their preparation. More specifically, the present invention relates to a titanium dioxide pigment with 2—6% by weight alumina composed of a composite of dense/boehmite alumina exhibiting good resistance to chalk-fade reaction, high gloss and excellent dispersibility.

The treatment of $TiO_2$ to improve durability by applying a protective coating is well-known in the art.

U.S. Patent 3,086,877 discloses a $TiO_2$ pigment with improved chalk-fade resistance. The pigment is produced by forming an acidic slurry of $TiO_2$ (pH less than 4) and neutralizing it (pH 6—8) with an aqueous sodium aluminate solution, followed by aging and dewatering. A subsequent heat treatment further improves the chalk-fade resistance.

U.S. Patent 3,437,502 discloses an improved $TiO_2$ pigment with high opacity and outstanding ease of dispersibility in liquid coating obtained by applying a dense silica coating to $TiO_2$ followed by a coating of alumina.

U.S. Patent 3,928,057 discloses a $TiO_2$ pigment having a first coating of porous silica or alumina and a dense coating of silica over the porous coating to achieve a pigment with a high degree of hiding power and durability.

U.S. Patent 3,523,810 discloses a $TiO_2$ pigment coated with boehmite alumina having a crystal size of at least 50 Å in diameter to provide the $TiO_2$ which will give the latex paint composition excellent viscosity stability.

U.S. Patent 4,022,636 discloses a method for preparing a $TiO_2$ pigment that has improved material handling characteristics for plastic systems by coating the $TiO_2$ first with amorphous alumina and then boehmite alumina. However, the total level of alumina coated is insufficient to provide a satisfactory product for paint systems where both gloss, dispersibility and chalk-fade resistance are desired. Such a pigment would not exhibit the chalk-fade resistance, gloss and dispersibility of the pigment of the present invention.

British Patent 1,368,601 discloses coating $TiO_2$ with alumina and then dissolving off a portion of the alumina coating and applying a second coating of hydrous titania and more alumina in order to prepare a $TiO_2$ pigment with improved gloss retention and resistance to chalking.

Durability for rutile $TiO_2$ pigment has been achieved in the past by depositing a dense silica coating on the pigment. An alumina coating has been applied over the silica coating to enhance pigment processing, as well as gloss and dispersibility. The gloss and dispersibility of a rutile $TiO_2$ pigment having only a coating of silica is inferior to a rutile $TiO_2$ pigment with an alumina coating. However, alumina coatings that are all boehmite alumina do not provide chalk-fade resistance.

A durable $TiO_2$ pigment has now been found comprising $TiO_2$ particles having a composite coating of dense alumina and boehmite alumina totalling 2—6% by weight alumina based on the $TiO_2$, said composite dense and boehmite alumina being present in a weight ratio of 8:1—1:2 of dense to boehmite alumina, the dense alumina defined as alumina having incorporated therein sulfate ion in a weight ratio of aluminum to sulfate ion of 10:1—1.3:1.

The present invention provides a $TiO_2$ rutile pigment with an alumina coating that exhibits excellent gloss and dispersibility along with light-fastness (resistance to chalk fade).

The present $TiO_2$ pigment has an alumina coating that is characterized by a portion being dense (containing sulfate) to achieve the chalk-fade resistance and a portion being boehmite, a form of hydrated alumina, to achieve both acceptable gloss and dispersibility.

The composite coating of the invention is applied to $TiO_2$ particles that have been prepared either by the vapor phase oxidation of titanium tetrachloride or with hydrolysis of titanium sulfate. One process for preparing the durable $TiO_2$ pigment having 2—6% by weight of alumina based on the $TiO_2$, said alumina having a 8:1—1:2 weight ratio of dense to boehmite alumina and a weight ratio of aluminum to sulfate ion of 10:1—1.3:1 comprises

(a) adding $TiO_2$ rutile pigment to water with agitation to form a slurry;

(b) heating the thus prepared slurry to 40—90°C;

(c) adding a soluble basic aluminum compound and/or an inorganic base to the slurry to attain a pH of 7.0—9.5;

(d) adding a sufficient amount of a soluble aluminum compound to deposit a total of 0.5—2% by weight alumina based on the $TiO_2$ while maintaining the pH at 7.0—9.5,

(e) lowering the pH to 5.2—6.5 with an acid;

(f) adding a sufficient amount of soluble aluminum compound to deposit in the presence of the required amount of sulfate ions 2—6% by weight of total alumina based on the $TiO_2$ while maintaining the pH at 5.2—6.5 at a temperature of 40—65°C;

(g) optionally agitating the slurry at 40—65°C for 1—180 minutes; and

(h) separating and washing the thus treated $TiO_2$ free of soluble salts.

The above process involves depositing boehmite alumina on the $TiO_2$ and then depositing dense alumina under conditions whereby a composite coating of dense and boehmite alumina is formed. Preferably, the soluble aluminum compound is sodium aluminate and the acid used to reach the pH of steps (d), (e) and (f) is sulfuric acid.

Another process for preparing the composite coating involves first depositing dense alumina on the $TiO_2$ and then subjecting the dense alumina to conditions whereby some of the dense alumina is converted to boehmite alumina. Accordingly, another process for preparing the durable $TiO_2$ pigment having 2—6% by weight of alumina based on the $TiO_2$, said alumina having an 8:1—1:2 weight ratio of dense to boehmite alumina and a weight ratio of aluminum to sulfate ion of 10:1—1.3:1 comprises

(a) adding $TiO_2$ rutile pigment to water with agitation to form a slurry;

(b) heating the thus prepared slurry to 30—65°C;

(c) adjusting the pH to 5.2—6.5;

(d) adding a sufficient amount of the soluble aluminum compound to deposit in the presence of the required amount of sulfate ions 2—6% by weight of total alumina based on the $TiO_2$ while maintaining the pH at 5.2—6.5 at a temperature of 30—65°C;

(e) agitating the slurry at 30—65°C for 5—180 minutes;

(f) adjusting the pH to 7.0—9.5;

(g) agitating the slurry for 5—60 minutes at 40—70°C while maintaining the pH at 7.0—9.5; and

(h) separating and washing the thus treated $TiO_2$ free of soluble salts.

The composite dense and boehmite alumina structure of the present invention provides the $TiO_2$ with improved durability, gloss and dispersibility. Composite structures outside the range of the invention do not provide the desired chalk resistance, gloss and dispersibility. For example, higher levels of dense relative to boehmite alumina gives higher chalk-fade resistance but marginal dispersibility and gloss.

Dense alumina is alumina having sulfate ions strongly adsorbed therein at a weight ratio of 10:1—1.3:1 of aluminum to sulfate ion. Alumina is densified by curing the alumina with the sulfate ions for a period of time at a temperature of 30—65°C and a pH of 5.2—6.5. Higher temperatures during precipitation or curing, e.g., 90°C would result in less than the required sulfate ion retention. Likewise, precipitation and curing outside the pH range will affect the amount of sulfate ion retention.

Boehmite is a crystalline form of alumina that contains sorbed water. The water is commonly intercalated between $Al(OH)_6$ octahedral layers in both random and regular arrangements.

The dense alumina provides the $TiO_2$ pigments with durability, e.g., lightfastness as measured by chalk-fade resistance. The boehmite alumina enhances gloss and dispersibility of the $TiO_2$ pigments.

The $TiO_2$ used to form the pigment with the improved durability, gloss and dispersibility of this invention is rutile $TiO_2$.

The sulfate ion may come from a variety of sources. It may come from the acid used to precipitate the alumina, e.g., sulfuric acid. It may come from the same source as the alumina, e.g., $Al_2(SO_4)_3$. It may also be separately added into the slurry when the slurry does not contain sufficient sulfate. For example, if sodium aluminate is used as the source of alumina and HCl as the acid, one could add a soluble sulfate such as sodium sulfate to provide sulfate ions. Any inorganic sulfate that will not interfere with the process can be used as a source of soluble sulfate.

The soluble aluminum compound of this invention provides the alumina needed. The soluble aluminum compound may be a basic or acidic aluminum salt. Representative examples of such compounds include sodium aluminate, potassium aluminate, aluminum sulfate, aluminum chloride, etc. Thus in some instances it may be convenient to use a basic aluminum salt to provide alumina as well to adjust the pH.

The preferred ratio of dense to boehmite alumina is 5:1—1:2 especially 3:1—1:2. The preferred ratio of aluminum to sulfate in the dense alumina is 5:1—1.3:1. The preferred pH for the slurry prior to addition of the alumina source is 1.5—3. The preferred alumina sources are sodium aluminate and aluminum sulfate. The most preferred · alumina source is sodium aluminate. The preferred acid for pH adjustment is sulfuric acid. The preferred base for pH adjustment is sodium hydroxide. The preferred process for forming the composite coating on $TiO_2$ involves subjecting the $TiO_2$ to conditions for boehmite formation followed by depositing alumina under conditions that will produce or form dense alumina.

It has surprisingly also has been that the addition of tetrapotassium pyrophosphate to the slurry of $TiO_2$ after or with the addition of the soluble aluminum compound results in a pigment of further improved durability over the durability achieved with only the composite alumina of the invention. Generally, 0.1—0.4% by weight of tetrapotassium pyrophosphate based on the $TiO_2$ is added to achieve improved results. The tetrapotassium pyrophosphate may be added simultaneously with the soluble aluminum compound or after the addition of the soluble aluminum compound but before the curing is completed by the agitation of the slurry for the time of up to 180 minutes.

The process of the invention wherein a soluble aluminum compound is added to the $TiO_2$ slurry at a pH of 7.0—9.5 and 40—90°C forms boehmite alumina. Preferred conditions for forming the boehmite are 45—60°C at a pH of 8—9. The subsequent deposition of alumina at a pH of 5.2—6.5 results in the formation of dense alumina during the treatment at 40—65°C. The preferred conditions for depositing dense alumina are 5.7—6.5 pH and a temperature of 45—60°C. The coated product may be optionally cured for 1—180 minutes while maintaining the pH at 5.2—6.5 and 40—65°C. It is preferable to cure the coated product for 1—180 minutes at 5.2—6.5 pH and 40—65°C. This process is preferred· since the conversion of the dense alumina to boehmite alumina is more sensitive to the conditions and therefore more difficult to control in commercial operations. Boehmite alumina is stable at the low pH after being formed at the high ·pH of the process. Dense alumina is formed at the low pH but not stable at the high pH of the process.

The process of the invention wherein the soluble aluminum compound is added to the slurry of TiO$_2$, after adjusting the pH to 5.2—6.5, involves formation of dense alumina when cured at 30—65°C for 5—180 minutes. The preferred initial pH of the slurry is 1.0—3.5 when the soluble aluminum compound is a sodium or potassium aluminate. The preferred subsequent treatment of the dense alumina at 45—60°C and pH of 8—9 for 5—40 minutes is to form boehmite alumina. Thus the alumina deposited on the TiO$_2$ initially that is dense alumina is partially converted to boehmite alumina to form the composite dense and boehmite structure of the invention.

Any inorganic base may be used for pH adjustment. The preferred base is sodium hydroxide. Representative examples include sodium hydroxide, potassium hydroxide and ammonium hydroxide.

Any acid may be used in the process of this invention that has sufficient acid strength to reach the desired pH under the conditions involved. Representative examples include HCl, H$_2$SO$_4$, HNO$_3$, acetic, H$_3$PO$_4$, etc.

Examples

The following examples further illustrate the invention.

Example 1—(Process of preparing the product of the invention by first forming boehmite alumina and then dense alumina)

In a stirred vessel, 6200 g rutile TiO$_2$ pigment in 15.5 liters of water were heated to 60°C and had a pH of 3.85. Sixty-three ml of concentrated H$_2$SO$_4$ were added to lower the pH of the pigment slurry to 1.5. The pH was adjusted to 8.5 with 34 ml of 50% NaOH and 196 ml of a sodium aluminate solution (315 g Al$_2$O$_3$/liter) over a 15 minute period, this formed 1% boehmite alumina based on the TiO$_2$. The pH of the system was then lowered to pH=5.5 with 6 ml of concentrated H$_2$SO$_4$. During a 30 minute period, a total of 393 ml of sodium aluminate solution (315 g Al$_2$O$_3$/liter) were added while maintaining the pH between 5.5 and 6.0 with concentrated H$_2$SO$_4$ (125 ml). After the alumina addition, the slurry was given a 15 minute cure at pH=5.7 and temperature of 60°C. 12.4 Grams of tetrapotassium pyrophosphate (TKPP) in 75 ml of water were added along with 2 ml concentrated H$_2$SO$_4$ to hold the pH at 5.7. The treated pigment slurry was then given a 30 minute cure at pH=5.7 and 60°C. The pigment was then filtered, washed free of salts and dried at 120°C. The pigment was then micronized in an 8″ (20 cm) steam micronizer using 3 kgs steam/kg pigment and evaluated for lightfastness, gloss and dispersion. The data is summarized in the table below.

Example 2

The procedure of Example 1 was followed except the TKPP treatment step was omitted. The data is summarized in the table below.

Example 3—(Coating dense alumina first followed by increasing pH to form boehmite alumina)

In a stirred vessel 5000 g rutile TiO$_2$ pigment in 12.5 liters of water were heated to 60°C and had a pH=3.65. Thirty-two ml of concentrated H$_2$SO$_4$ were added to lower the pH to 1.5. During a 30 minute period, 417 ml of sodium aluminate solution (360 g Al$_2$O$_3$/liter) were added initially bringing the pH to 6.2—6.4 at which it was controlled with 93 ml of concentrated H$_2$SO$_4$. The slurry was cured for 30 minutes at pH=6.2, temperature 60°C. Ten grams of tetrapotassium pyrophosphate (TKPP) dissolved in 50 ml of water were added along with 2 ml concentrated H$_2$SO$_4$ to maintain the pH at 6.2. The slurry was then cured for 15 minutes. The pH of the slurry was increased to 7.5 with 50% NaOH solution for boehmite formation. After 30 minutes, the pigment was filtered, washed and dried at 120°C. The pigment was then micronized in an 8″ (20 cm) steam micronizer using 2.8 kgs steam/kg of pigment and evaluated for lightfastness, gloss and dispersion. The data is summarized in the table below.

Example 4

The procedure of Example 3 was followed except the TKPP treatment was omitted. The pigment wsa evaluated. The data is summarized in the table below.

Example 5—(High ratio of dense alumina to boehmite)

In a stirred vessel 6200 g rutile TiO$_2$ pigment in 15.5 liters of water were heated to 60°C and had a pH of 3.43. Fifty ml of concentrated H$_2$SO$_4$ were added to lower the pH to 1.5. During a 30 minute period, 517 ml of sodium aluminate solution (360 g Al$_2$O$_3$/liter) were added initially to bring the pH to 6.2 at which it was maintained with 111 ml of concentrated H$_2$SO$_4$. The pigment slurry was cured for 30 minutes. 12.4 Grams of tetrapotassium pyrophosphate (TKPP) were added along with 1 ml concentrated H$_2$SO$_4$ to hold pH at 6.2. The slurry was cured for 15 minutes at pH=6.2 and 60°C. The pigment was then filtered, washed free of soluble salts and dried at 120°C. The dried pigment was steam micronized in an 8″ (20 cm) micronizer using 3 kgs steam/kg pigment and evaluated for lightfastness, gloss and dispersion. The data is summarized in the table below.

Example 6

The same procedure as in ·Example 5 was followed except without the TKPP treatment. The data is summarized in the table below.

Example A—(All boehmite alumina coating)

In a stirred vessel 6200 g rutile TiO$_2$ pigment in 15.5 liters of water were heated to 60°C and had a pH=3.35. Twenty-eight ml of concentrated H$_2$SO$_4$ were added to lower the pH to 1.5. During a 30 minute period, 517 ml of sodium aluminate solution (360 g Al$_2$O$_3$/liter) were added at pH=8.5 controlling the pH with 102 ml of concentrated $H_2SO_4$. The alumina coated pigment slurry was cured for 30 minutes at pH=8.5 and 60°C. The pigment was then filtered, washed free of soluble salts and dried at 120°C. The dried pigment was steam micronized in an 8″ (20 cm) micronizer using 3 kg steam/kg pigment and then evaluated for lightfastness, gloss and dispersion. The data is summarized in the table below.

Example B—(Coating of 1.5% $SiO_2$/3.0% $Al_2O_3$)

In a stirred vessel 6800 g rutile $TiO_2$ pigment in 17 liters of water were added to 90°C and had a pH=2.90. Added 27.2 ml of 50% NaOH to pH=9.0. Added 255 ml sodium silicate solution (400 g/liter $SiO_2$) controlling the pH at 9.4 with 21 ml of concentrated $H_2SO_4$. The silica coated $TiO_2$ slurry was cured for 30 minutes at pH=8.5 and 90°C. During a 30 minute period, 570ml of sodium aluminate solution (360 g/$Al_2O_3$ per liter) were added while controlling the pH at 8.5 and temperature at 60°C. The silica/alumina coated $TiO_2$ slurry was cured 15 minutes at pH=8.5 and 60°C. The coated pigment was filtered, washed free of soluble salts and dried at 120°C. The dried pigment was steam micronized in an 8″ (20 cm) micronizer using 3 kgs steam/kg pigment and then evaluated for lightfasteness, gloss and dispersion.

A scale of 0—10 was used to rate the pigments after exposure to ultraviolet light. A pigment with a value of 10 would show no UV activity whereas an extremely photoactive pigment would get a value of zero. Titanium dioxide pigment with lightfastness values in excess of 5 can be used in applications where UV durability is desired. Any lightfastness test normally used for paint systems can be used to obtain lightfastness values. The data is summarized in the table below.

The following tables summarize the pertinent data for the above examples:

| | Lightness value | 30J gloss | TFW-124 dispersion | Boehmite* alumina % |
|---|---|---|---|---|
| Example 1 | 6.25 | 72 | $7\frac{1}{4}$—$6\frac{1}{2}$(3) | 1.0 |
| Example 2 | 5.25 | 73 | 7—6(7) | 1.1 |
| Example 3 | 6.0 | 71 | 7—6(7) | 1.2 |
| Example 4 | 5.25 | 72 | 7—6(6) | 0.9 |
| Example 5 | 7.5 | 67 | 7—5(22) | 0.4 |
| Example 6 | 6.5 | 67 | 7—5(20) | 0.4 |
| Controls | | | | |
| Example A all boehmite coating | 3.75 | 73 | $7\frac{1}{4}$—$6\frac{1}{2}$(5) | 2.8 |
| Example B 1.5% $SiO_2$ 3.0% $Al_2O_3$ | 6.25 | 63 | 7—3(22) | 1.1 |

*Estimated from infrared absorption curves and thermal gravimetric analysis based on the weight of coated $TiO_2$ product.

| | Sulfate* content % | Ratio dense/boehmite $Al_2O_3$ | $SiO_2$ %* |
|---|---|---|---|
| Example 1 | 0.36 | 2 | — |
| Example 2 | 0.38 | 1.8 | — |
| Example 3 | 0.34 | 1.5 | — |
| Example 4 | 0.40 | 2.3 | — |
| Example 5 | 0.67 | 6.5 | — |
| Example 6 | 0.62 | 6.5 | — |
| Controls | | | |
| Example A all boehmite coating | 0.02 | 0.06 | — |
| Example B 1.5% $SiO_2$/ 3.0% $Al_2O_3$ | 0.02 | — | 1.5 |

*Based on the weight of $TiO_2$ coated product.

When preparing pigments in accordance with the invention by first precipitating dense alumina at an acid pH, it is not always necessary to raise the pH to a value between 7 and 9.5 in order to convert a proportion of dense alumina to boehmite. As illustrated in Examples 5 and 6, a small proportion of boehmite alumina is formed, along with dense alumina, if the alumina is precipitated at an acid pH close to neutrality, e.g. at pH 6.2 or higher. Further quantities of boehmite may be formed by digesting the alumina-coated pigment under similar pH conditions, although the rate of conversion to boehmite proceeds more readily at a pH between 7 and 9.5 and at elevated temperature.

It will be noted from the Tables of Results above that the light-fastness values of pigments prepared in accordance with the invention are comparable with, and in some cases superior to, the Example B control in which separate after treatments with both silica and alumina are employed. Also, in general, the dispersibility of the pigments of the invention are superior. This illustrates a significant advantage arising from this invention i.e. that it is possible to achieve comparable pigment properties without requiring to precipitate another metal oxide, such as silica, onto the pigment particles.

It is to be understood that any of the components and conditions mentioned as suitable herein can be substituted for its counterpart in the foregoing examples and that although the invention has been described in considerable detail in the foregoing, such detail is solely for the purpose of illustration. Variations can be made in the invention by those skilled in the art without departing from the spirit and scope of the invention except as set forth in the claims.

**Claims**

1. $TiO_2$ particles comprising a composite coating of dense alumina and boehmite alumina totalling 2—6% by weight alumina based on the $TiO_2$, said composite dense and boehmite alumina being present in a weight ratio of 8:1—1:2 of dense to boehmite alumina, the dense alumina defined as alumina having incorporated therein sulfate ion in a weight ratio of aluminum to sulfate of 10:1—1.3:1.

2. $TiO_2$ particles according to Claim 1 wherein the weight ratio of dense to boehmite alumina is 5:1—1:2.

3. $TiO_2$ particles according to Claim 1 or Claim 2 having incorporated with the alumina 0.1—0.4% by weight of tetrapotassium pyrophosphate based on the $TiO_2$.

4. A process for preparing a chalk-fade resistant $TiO_2$ pigment having 2—6% by weight of alumina based on the $TiO_2$, said alumina having a 8:1—1:2 weight ratio of dense to boehmite alumina and a weight ratio of aluminum to sulfate of 10:1—1.3:1 comprising

(a) adding $TiO_2$ rutile pigment to water with agitation to form a slurry;

(b) heating the thus prepared slurry to 40—90°C;

(c) adding a soluble basic aluminum compound and/or an inorganic base to the slurry to raise the pH to 7.0—9.5;

(d) adding a sufficient amount of the soluble aluminum compound to deposit a total of 0.5—

2% by weight alumina based on the $TiO_2$ while maintaining the pH at 7.0—9.5;

(e) lowering the pH to 5.2—6.5 with an acid;

(f) adding a sufficient amount of the soluble aluminum compound to deposit in the presence of the required amount of sulfate ions 2—6% by weight of total alumina based on the $TiO_2$ while maintaining the pH at 5.2—6.5 at a temperature of 40—65°C;

(g) optionally agitating the slurry at 40—65°C for 1—180 minutes; and

(h) separating and washing the thus treated $TiO_2$ free of soluble salts.

5. A process according to Claim 4 wherein 0.1—0.4% by weight of tetrapotassium pyrophosphate based on the $TiO_2$ is added after (f) but before (g).

6. A process for preparing a durable $TiO_2$ pigment having 2—6% by weight of alumina based on the $TiO_2$, said alumina having a 8:1—1:2 weight ratio of dense to boehmite alumina and a weight ratio of aluminum to sulfate of 10:1—1.3:1 comprising

(a) adding $TiO_2$ rutile pigment to water with agitation to form a slurry;

(b) heating the thus prepared slurry to 30—65°C;

(c) adjusting the pH to 5.2—6.5;

(d) adding a sufficient amount of the soluble aluminum compound to deposit in the presence of the required amount of sulfate ions 2—6% by weight of total alumina based on the $TiO_2$ while maintaining the pH at 5.2—6.5 at a temperature of 30—65°C;

(e) agitating the slurry at 30—65°C for 5—180 minutes;

(f) adjusting the pH to 7 to 9.5;

(g) agitating the slurry for 5—60 minutes at 40—70°C while maintaining the pH of 7 to 9.5; and

(h) separating and washing the thus treated $TiO_2$ free of soluble salts.

7. A process according to Claim 6 wherein the pH of the slurry before step (c) is 1.5—3.

8. A process according to Claim 6 or 7 wherein 0.1—0.4% by weight of tetrapotassium pyrophosphate based on the $TiO_2$ is added after (d) but before (e).

9. A process according to Claim 6 or 7 wherein 0.1—0.4% by weight of tetrapotassium pyrophosphate based on the $TiO_2$ is added simultaneously with the aluminum compound.

10. A paint composition pigmented with $TiO_2$ particles having a composite coating of dense alumina and boehmite alumina totalling 2—6% by weight alumina based on the $TiO_2$, said composite dense and boehmite alumina present in a weight ratio of 8:1—1:2 of dense to boehmite, the dense alumina having incorporated therein sulfate in a weight ratio of aluminum to sulfate of 10:1—1.3:1.

**Patentansprüche**

1. $TiO_2$-Teilchen, enthaltend einen zusammengesetzten Überzug aus dichtem Aluminiumoxid und Böhmit-Aluminiumoxid in einer Menge von 2 bis 6 Gew.% Aluminiumoxid, bezogen auf das $TiO_2$, wobei die Mischung aus dichtem Aluminiumoxid und Böhmit-Aluminiumoxid in einem Gewichtsverhältnis von 8:1—1:2 von dichtem Aluminium-oxid zu Böhmit-Aluminiumoxid enthalten ist und das dichte Aluminiumoxid als Aluminiumoxid definiert ist, Sulfation in einem Gewichtsverhältnis von Aluminium zu Sulfat von 10:1—1,3:1 einverleibt enthält.

2. $TiO_2$-Teilchen nach Anspruch 1, in denen das Gewichtsverhältnis von dichtem Aluminiumoxid zu Böhmit-Aluminiumoxid 5:1—1:2 betragt.

3. $TiO_2$-Teilchen nach Anspruch 1 oder 2, die mit dem Aluminiumoxid 0,1—0,4 Gew.% Tetrakaliumpyrophosphat, bezogen auf das $TiO_2$, einverleibt enthalten.

4. Ein Verfahren zur Herstellung eines kreidungsfesten $TiO_2$-Pigmentes mit 2 bis 6 Gew.% Aluminiumoxid, bezogen auf das $TiO_2$, wobei das Aluminiumoxid aus dichtem Aluminiumoxid und Böhmit-Aluminiumoxid in einem Gewichtsverhältnis von 8:1—1:2 besteht und das Gewichtsverhältnis von Aluminium zu Sulfat 10:1—1,3:1 beträgt, bei dem man

(a) $TiO_2$-Rutil-Pigment unter Rühren zu Wasser zusetzt, um eine Aufschlämmung zu bilden,

(b) die so hergestellte Aufschlämmung auf 40—90°C erhitzt,

(c) zu der Aufschlämmung eine lösliche basische Aluminiumverbindung und/oder eine anorganische Base zusetzt, um das pH auf 7,0—9,5 zu erhöhen,

(d) eine genügende Menge der löslichen Aluminiumverbindung zusetzt, um insgesamt 0,5—2 Gew.% Aluminiumoxid, bezogen auf das $TiO_2$, niederzuschlagen, während das pH bei 7,0—9,5 gehalten wird,

(e) den pH-Wert mit einer Säure auf 5,2—6,5 erniedrigt,

(f) eine genügende Menge der löslichen Aluminiumverbindung zusetzt, um 2—6 Gew.% Gesamtaluminiumoxid, bezogen auf das $TiO_2$, in Gegenwart der erforderlichen Menge von Sulfationen auszufällen, während der pH-Wert bei 5,2—6,5 und einer Temperatur von 40—65°C gehalten wird,

(g) wahlweise die Aufschlämmung 1—180 Minuten bei 40—65°C rührt und

(h) das so behandelte $TiO_2$ abtrennt und frei von löslichen Salzen wäscht.

5. Ein Verfahren nach Anspruch 4, bei dem 0,1—0,4 Gew.% Tetrakaliumpyrophosphat, bezogen auf das $TiO_2$, nach Stufe (f), aber vor Stufe (g), zugesetzt werden.

6. Ein Verfahren zur Herstellung eines haltbaren $TiO_2$-Pigmentes mit einem Gehalt an Aluminiumoxid in einer Menge von 2—6 Gew.%, bezogen auf das $TiO_2$, wobei das Aluminiumoxid aus einem Gemisch von dichtem Aluminiumoxid und Böhmit-Aluminiumoxid in einem Gewichtshältnis von 8:1—1:2 besteht, und das Gewichtsverhältnis von Aluminium zu Sulfat von 10:1—1,3:1 beträgt, bei dem man

(a) TiO₂-Rutil-Pigment zu Wasser unter Rühren zusetzt, um eine Aufschlämmung zu bilden,

(b) die so hergestellte Aufschlämmung auf 30—65°C erhitzt,

(c) den pH-Wert auf 5,2—6,5 einstellt,

(d) eine genügende Menge der löslichen Aluminiumverbindung zusetzt, um 2—6 Gew.% Gesamtaluminiumoxid, bezogen auf das TiO₂, in Gegenwart der erforderlichen Menge von Sulfationen auszufällen, während das pH bei 5,2—6,5 und einer Temperatur von 30—65°C gehalten wird,

(e) die Aufschlämmung 5—180 Minuten bei 30—65°C rührt,

(f) das pH auf 7 bis 9,5 einstellt,

(g) die Aufschlämmung 5—60 Minuten bei 40—70°C rührt, während das pH auf 7 bis 9,5 gehalten wird, und

(h) das so behandelte TiO₂ abtrennt und frei von löslichen Salzen wäscht.

7. Ein Verfahren nach Anspruch 6, bei dem das pH der Aufschlämmung vor der Stufe (c) 1,5—3 beträgt.

8. Ein Verfahren nach Anspruch 6 oder 7, bei dem 0,1—0,4 Gew.% Tetrakaliumpyrophosphat, bezogen auf das TiO₂, nach Stufe (d), aber vor Stufe (e), zugesetzt werden.

9. Ein Verfahren nach Anspruch 6 oder 7, bei dem 0,1—0,4 Gew.% Tetrakaliumpyrophosphat, bezogen auf das TiO₂, gleichzeitig mit der Aluminiumverbindung zugesetzt werden.

10. Eine Anstrichmasse, die mit TiO₂-Teilchen pigmentiert ist, die einen aus dichtem Aluminiumoxid und Böhmit-Aluminiumoxid zusammengesetzten Überzug in einer Menge von 2—6 Gew.% Aluminiumoxid, bezogen auf das TiO₂, enthalten, wobei das Gewichtsverhältnis von dichtem Aluminiumoxid zu Böhmit-Aluminiumoxid 8:1—1:2 beträgt und das dichte Aluminiumoxid Sulfat in einem Gewichtsverhältnis von Aluminium zu Sulfat von 10:1—1,3:1 enthält.

## Revendications

1. Particules de TiO₂ comprenant un revêtement composite d'alumine dense et d'alumine boehmite faisant au total 2—6% en poids d'alumine sur la base du TiO₂, ledit composite d'alumine dense et de boehmite étant présent en un rapport en poids de 8:1—1:2 de l'alumine dense à la boehmite, l'alumine dense étant définie comme une alumine à laquelle sont incorporés des ions sulfate en un rapport en poids de l'aluminium aux ions sulfate de 10:1—1,3:1.

2. Particules de TiO₂ selon la revendication 1, dans lesquelles le rapport en poids de l'alumine dense à la boemite est de 5:1—1:2.

3. Particules de TiO₂ selon la revendication 1 ou 2, comportant du pyrophosphate tétrapotassique incorporé à l'alumine à raison de 0,1—0,4% en poids sur la base du TiO₂.

4. Un procédé pour préparer un pigment TiO₂ résistant à l'altération de couleur par farinage, comportant 2—6% en poids d'alumine sur la base du TiO₂, ladite alumine ayant un rapport alumine dense:boehmite de 8:1—1:2 en poids et un rapport aluminium:sulfate de 10:1—1,3:1 en poids, consistant à

(a) ajouter un pigment TiO₂ rutile à de l'eau sous agitation pour former une suspension;

(b) chauffer la suspension ainsi préparée à 40—90°C;

(c) ajouter à la suspension un composé basique soluble d'aluminium et/ou une base minérale pour atteindre un pH de 7,0—9,5;

(d) ajouter une quantité suffisante d'un composé soluble d'aluminium pour déposer un total de 0,5—2% en poids d'alumine sur la base du TiO₂, tout en maintenant le pH à 7,0—9,5;

(e) abaisser le pH à 5,2—6,5 avec un acide;

(f) ajouter une quantité suffisante du composé soluble d'aluminium pour déposer, en présence de la quantité requise d'ions sulfate, 2—6% en poids d'alumine totale sur la base du TiO₂, tout en maintenant le pH à 5,2—6,5 à une température de 40—65°C;

(g) agiter facultativement la suspension à 40—65°C pendant 1—180 minutes; et

(h) séparer et laver le TiO₂ ainsi traité jusqu'à ce qu'il soit exempt de sels solubles.

5. Un procédé selon la revendication 4, dans lequel 0,1—0,4% en poids, sur la base du TiO₂, de pyrophosphate tétrapotassique est ajouté après (f) mais avant (g).

6. Un procédé pour préparer un pigment TiO₂ durable comportant 2—6% en poids d'alumine sur la base du TiO₂, ladite alumine ayant un rapport alumine dense:boehmite de 8:1—1:2 en poids et un rapport aluminium:sulfate de 10:1—1,3:1 en poids, consistant à

(a) ajouter un pigment de TiO₂ rutile à de l'eau sous agitation pour former une suspension;

(b) chauffer la suspension ainsi préparée à 30—65°C;

(c) ajuster le pH à 5,2—6,5;

(d) ajouter une quantité suffisante du composé soluble d'aluminium pour déposer, en présence de la quantité requise d'ions sulfate, 2—6% en poids d'alumine totale sur la base du TiO₂, tout en maintenant le pH à 5,2—6,5 à une température de 30—65°C;

(e) agiter la suspension à 30—65°C pendant 5—180 minutes;

(f) ajuster le pH à une valeur de 7 à 9,5;

(g) agiter la suspension pendant 5—60 minutes à 40—70°C tout en maintenant le pH à une valeur de 7 à 9,5; et

(h) séparer et laver le TiO₂ ainsi traité jusqu'à ce qu'il soit exempt de sels solubles.

7. Un procédé selon la revendication 6, dans lequel le pH de la suspension est de 1,5—3 avant l'étape (c).

8. Un procédé selon la revendication 6 ou 7, dans lequel 0,1—0,4 % en poids, sur la base du TiO₂, de pyrophosphate tétrapotassique est ajouté après (d) mais avant (e).

9. Un procédé selon la revendication 6 ou 7, dans lequel 0,1—0,4% en poids, sur la base du TiO₂, de pyrophosphate tétrapotassique est ajouté en même temps que le composé d'aluminium.

10. Une composition de peinture pigmentée par des particules de TiO$_2$ comportant un revêtement composite d'alumine dense et d'alumine boehmite faisant au total 2—6 % en poids d'alumine sur la base du TiO$_2$, ledit composite d'alumine dense et d'alumine boehmite étant présent en un rapport en poids de 8:1—1:2 de l'alumine dense à la boehmite, du sulfate étant incorporé à l'alumine dense en un rapport en poids de l'aluminium au sulfate de 10:1—1,3:1.